# EUROPEAN PATENT APPLICATION

(11) **EP 0 635 948 A1**
(43) Date of publication of application: **25.01.1995**
(21) Application number: 94305208.4
(22) Date of filing: 15.07.1994
(51) Int. Cl.: H04B 3/06

(54) **Method and circuit for correcting performance degradation in a high speed digital cable equalizer**

(30) Priority: 23.07.1993 US 96353
(71) Applicant: GENNUM CORPORATION, Burlington, Ontario L7R 3Y3 (CA)
(72) Inventor: Webster, Stephen, Oakville, Ontario L6L 3B1 (CA)
(74) Representative: Bibby, William Mark

(57) **Abstract**

A circuit for improving the performance degradation of a cable equalizer in a serial digital transmission system wherein the performance degradation results from parasitic coupling between the input and output of the cable equalizer. The circuit comprises a potentiometer which is coupled to the output of the cable equalizer. The wiper of the potentiometer is coupled to the input of the cable equalizer through a capacitor and a resistor. The capacitor produces a correction signal on the input which is proportional to the derivative of the output signal of the equalizer. The resistor coupled to the capacitor injects the correction signal into the input signal to reduce the effect of the parasitic coupling between the input and output of the cable equalizer.

## Description

### FIELD OF THE INVENTION

The present invention relates to a circuit for use with a cable equalizer in a data transmission system. More particularly, the present invention relates to a circuit for correcting performance degradation which arises from physical layout effects in a high-bit serial digital cable equalizer.

### BACKGROUND OF THE INVENTION

High speed serial data transmission systems typically include a cable equalizer for regeneration of the signal at the receiver end. In a typical transmission system, the cable equalizer will be required to regenerate high frequency signals (e.g. 135 MegaHertz) which have been attenuated by as much as 30 decibels (dB).

In a typical system, the cable equalizer comprises a circuit which is a monolithic integrated circuit. As will be appreciated, an advantage of a monolithic integrated circuit implementation is the compact size of the package and savings in printed circuit board area. However, the close proximity of the signal input stage and the signal output stage on the integrated equalizer circuit can create conditions for unwanted feedback mechanisms. These feedback mechanisms can ultimately degrade the input signal to noise level and hence the overall performance of the data transmission system.

A principal cause of this unwanted feedback is parasitic inductance and capacitance in the external packaging of the integrated circuit and the interconnect on the printed circuit board which surrounds the integrated equalizer circuit. Typically the currents and voltages in the output stage of the equalizer circuit are coupled back to the input by the presence of the unwanted inductance (Ldi/dt) and capacitance (Cdv/dt) respectively. Consequently, this parasitic coupling produces an interference signal which frequently takes the form of a small and differentiated version of the output signal from the equalizer circuit.

It will be appreciated by those skilled in the art that the appearance of the interference signal can result in performance degradation in the operation of the cable equalizer and the data transmission system.

### BRIEF SUMMARY OF THE INVENTION

In a first aspect, of the present invention provides a circuit comprising a potentiometer, a capacitor and a resistor. The circuit is coupled between the input port and output port of a monolithic integrated cable equalizer.

The function of the network is to intentionally create a signal which is the complement of the resultant of all interfering signals which are summed at the input of the equalizer. By injecting such a signal at the input port of the equalizer, the circuit according to the present invention can affect cancellation which will increase the input signal-to-noise ratio and extends the operating range of the equalizer (as determined by the maximum equalizer cable length).

### BRIEF DESCRIPTION OF THE DRAWINGS

For a better understanding of the present invention, and to show more clearly how it may be carried into effect, reference will now be made, by way of example, to the accompanying drawings which show a preferred embodiment of the present invention:
Figure 1 shows in block diagram form a correction circuit according to the present invention which is coupled to a typical serial data transmission system;
Figure 2 shows in schematic form the correction circuit of Figure 1; and
Figure 3 shows in diagrammatic form a typical input signal and a correction signal which is generated by the circuit of Figure 2.

### DETAILED DESCRIPTION OF THE PREFERRED EMBODIMENT

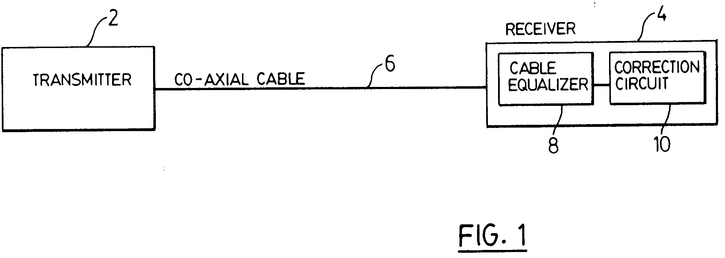

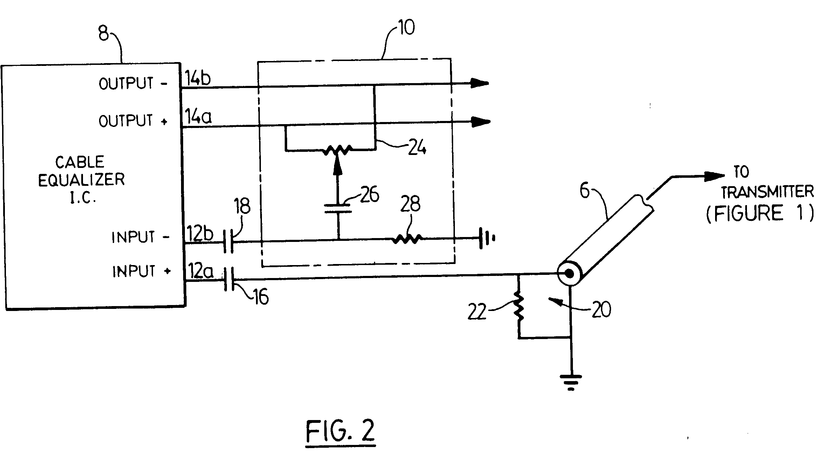

Figure 1 shows a typical known serial digital transmission system 1 in simplified block diagram form. The system 1 comprises a transmitter 2 and a receiver 4. The transmitter 2 and receiver 4 are coupled together by a co-axial cable 6 which serves as the transmission medium. In known manner, the transmitter 2 includes electronic circuitry (not shown) for encoding the information to be transmitted into serial binary data. Similarly, the receiver 4 includes circuitry (not shown) for decoding (e.g. demodulating) the transmitted serial binary data.

In a system 1 where the co-axial cable 6 is AC coupled, the receiver 4 will include a cable equalizer circuit 8 which comprises a restoration circuit (not shown) and a high frequency equalizer (not shown). The function of the restoration circuit is to recover the low frequency and DC components of the serial signal. The low frequency and DC components of the serial signal are lost through the AC coupling circuits (not shown) as will be understood by one skilled in the art.

The receiver 4 typically comprises a printed circuit board (not shown) on which the equalizer circuit 8 and other circuit elements are mounted using known techniques.

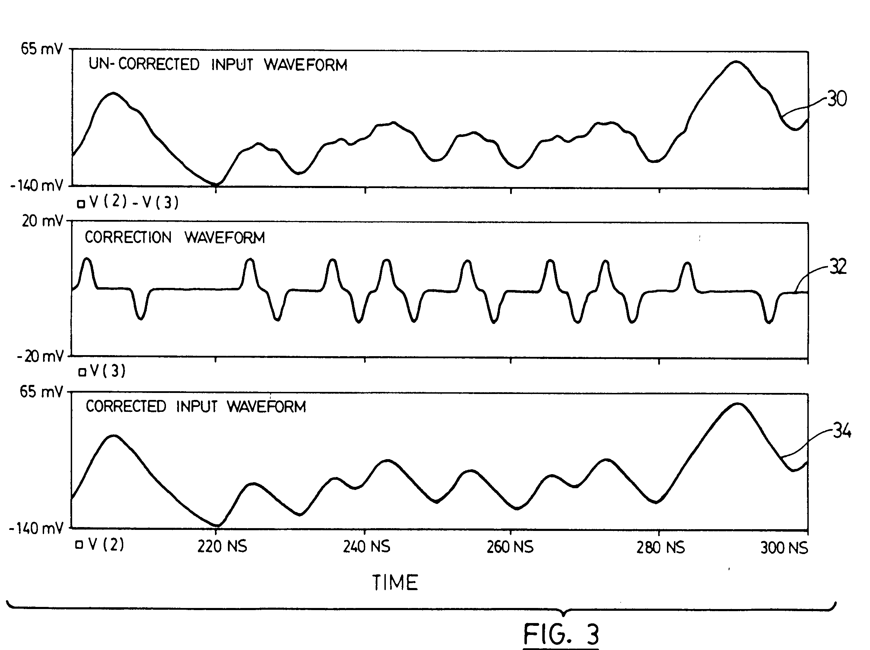

A correction circuit 10 according to the present invention is coupled to the cable equalizer 8 in the receiver 4. As will be explained in detail below, the primary function of the correction circuit 10 is to produce a correction signal 32 (Figure 3) which cancels the interference signals arising from the parasitic capacitance and inductance between the equalizer circuit and the interconnect on the printed circuit board for the receiver 4.

Reference is next made to Figure 2 which shows in detail the correction circuit 10 coupled to the equalizer circuit 8. The equalizer circuit 8 is typically implemented as a monolithic integrated circuit. The equalizer 8 has a signal input port 12 and a signal output port 14. Typically, the signal input port 12 is implemented with differential signal inputs 12a,12b, and the signal output port 14 is also implemented with differential signal outputs 14a,14b.

The signal input port 12 is coupled to the co-axial cable 6 through a coupling capacitor 16 and an input network 20 (which includes a shunt resistor 22 and a ground connection 21 for the coaxial cable as shown in Figure 2.

Referring still to Figure 2, the correction circuit 10 is coupled across the output port 14 and the inverting signal input 12b. The correction circuit 10 comprises a potentiometer 24. The potentiometer is connected across the non-inverting signal output 14a and the inverting signal output 14b, and the wiper of the potentiometer 24 is coupled to the inverting signal input 12b through a capacitor 26 which is also coupled to signal ground through a resistor 28.

In an implementation where the equalizer circuit 8 is a monolithic integrated circuit, the proximity of the input port 12 to the output port 14 combined with the parasitic effect of the interconnect (i.e. tracks) on the printed circuit board (not shown) will produce an interference signal at the input port 12 as a result of inductive and capacitive coupling. The effect of this interference signal is to distort the original input signal 30 (Figure 3).

With reference to Figure 2, the operation of the correction circuit 10 according to the present invention can be explained as follows. The potentiometer 10 has an adjustment range which can be set to provide any voltage level from zero (i.e. the wiper of the potentiometer 24 is in the middle) to the full value of the signal at the output port 14. (i.e. wiper is at either extreme), and with either polarity signal. The capacitor 26 has a small value (e.g. 1.8 picoFarads) so that the capacitor 26 presents a relatively large reactance to the wiper of the potentiometer 24. The resistor 28 is also selected to have a small value (e.g. 39 ohms) compared to the reactance of the capacitor 26 so that most of the voltage in the output signal at the wiper of the potentiometer 24 appears across the capacitor 26. This ensures that the current in the branch consisting of the capacitor 26 and the resistor 28 is largely determined by the voltage at the wiper of the potentiometer 24 and the reactance of the capacitor 26.

In accordance with the known relationship between the voltage and current in a capacitor, the current in capacitor 26 will be proportional to the derivative of the voltage across the capacitor 26. Thus, the current in the capacitor 26 will closely approximate the derivative of the voltage at the wiper of the potentiometer 14 (which will be proportional to the signal on the output port 14). Since this current flows in the resistor 28, a small voltage representing the derivative (see correction signal 32 in Figure 3) of the output signal is developed across the resistor 28 and serves as a stimulus for the inverting signal input 12b of the equalizer circuit 10. The magnitude and the plurality of this voltage can be adjusted by adjusting the wiper of the potentiometer 24. Therefore, the correction circuit 10 provides the ability to reduce the effects of unwanted feedback by adjusting the potentiometer 24 until the desired cancellation of feedback is achieved (see corrected input signal 34 in Figure 3).

For the manufacture of receivers 4 having a given set of physical parameters, e.g. the same integrated circuit equalizers and printed circuit board layout characteristics, a particular setting for the potentiometer 24 may be chosen which is the same for all the receivers 4, and the potentiometer 24 can be replaced by fixed resistors (not shown) in order to eliminate the need for individual adjustment.

In summary, an advantage of the correction circuit 10 according to the present invention is that it can reduce the signal degradation (due to parasitic coupling between the input and output) in an equalizer 8 without the need to address the physical layout of the printed circuit board (for the receiver 4) which could require alterations to the packaging of the equalizer 8 and/or printed circuit board layout.

It will be evident to those skilled in the art that other embodiments of the invention fall within its spirit and scope as defined by the following claims.

## Claims

1. A correction circuit for use with a cable equalizer in a serial data transmission system, the cable equalizer having an input port for an input signal and an output port for an output signal, said correction circuit comprising:
(a) means for producing a correction signal which is the derivative of the output signal; and
(b) means for injecting said correction signal into the input signal so that the effect of capacitive and inductive coupling between the input port and output port is reduced.

2. The circuit as claimed in claim 1 further including adjustment means for varying said correction signal.

3. The circuit as claimed in claim 2 wherein said means for producing a correction signal comprises a potentiometer and a capacitor, said potentiometer having first and second terminals and a control terminal, said first and second terminals being coupled to the output port of the equalizer and said control terminal being coupled to the input port through said capacitor, and wherein said adjustment means comprises said control terminal.

4. The circuit claimed in claim 3 wherein said means for injecting comprises a resistor connected to said capacitor and to the input port of the equalizer, and said resistor having means for producing a voltage in said correction signal which is proportional and corresponds to the derivative of the output signal.

5. A method for improving the performance of a cable equalizer having an input port for an input signal and an output port for an output signal, the performance degradation resulting from parasitic coupling between the input signal and the output signal, said method comprising the steps of:
(a) differentiating the output signal to produce a correction signal which is the derivative of the output signal;
(b) complementing said correction signal; and
(c) injecting said correction signal into the input signal so that the effect of the parasitic coupling is cancelled.
